# EUROPEAN PATENT APPLICATION

(11) **EP 4 119 376 A1**
(43) Date of publication of application: **18.01.2023**
(21) Application number: 22181413.0
(22) Date of filing: 28.06.2022
(51) Int. Cl.: B60K 6/387, B60K 6/547, B60W 10/02, B60W 10/06, B60W 10/08, B60W 20/18, B60W 20/40, B60W 50/14, B60K 6/48

(54) **DRIVE CONTROL DEVICE OF HYBRID VEHICLE, HYBRID VEHICLE, AND METHOD OF CONTROLLING HYBRID VEHICLE**

(30) Priority: 14.07.2021 JP 2021116568
(71) Applicant: MAZDA MOTOR CORPORATION, Hiroshima 730-8670 (JP)
(72) Inventor: HADAMA, Kouji, Aki-gun, Hiroshima (JP); OKITA, Yusuke, Aki-gun, Hiroshima (JP)
(74) Representative: Müller-Boré & Partner Patentanwälte PartG mbB

(57) **Abstract**

A drive control device of a hybrid vehicle provided with a motor and an engine is provided. The control device includes a processor configured to execute a target fuel consumption setting module that sets a target fuel consumption according to the number of lapsed days from a given reference timing, an actual fuel consumption calculating module that calculates an actual fuel consumption actually consumed during a specific period from the reference timing, a forcible consumption calculating module that compares the actual fuel consumption with the target fuel consumption, and when the actual fuel consumption is less than the target fuel consumption, calculates a forcible consumption of fuel according to a difference therebetween, and a traveling controlling module that controls the drive of the motor and the engine so that traveling at least with the engine is continuously performed until the fuel is consumed by the forcible consumption.

## Description

### TECHNICAL FIELD

The present invention relates to a drive control device of a hybrid vehicle, provided with a motor and an engine (internal combustion engine) as propulsion sources of the vehicle. The present invention also relates to a hybrid vehicle and a method of controlling a hybrid vehicle.

### BACKGROUND

Hybrid vehicles provided with a motor and an engine as propulsion sources of the vehicle also use the engine according to an acceleration demand, a residual charged capacity, etc., while propelling the vehicle with the motor. Therefore, depending on the status or environment of the use of the vehicle, the frequency of use of the engine may decrease remarkably. Particularly, in plug-in hybrid vehicles (PHVs) in which an engine is not started unless the mileage exceeds a battery drivable distance, if fuel which is added to a fuel tank is not used for a long period of time and deteriorates, this deteriorated fuel may cause corrosion of the fuel pipe and the fuel tank, to adversely affect the fuel system components.

It is noted that JP2014-094698A discloses a technique for storing the day on which the engine is last started (internal combustion engine started day), and after a given period of time passes from this day, forcibly starting the engine when propelling the vehicle. According to this technique, since the engine is started periodically, it is effective for solving the problem described above.

However, JP2014-094698A only discloses the periodic start of the engine, and does not describe how long the started state of the engine should be continued (i.e., how much fuel needs to be consumed). Even if the engine is started periodically, fuel deterioration may not be fully suppressed by only a small amount of fuel being consumed. Therefore, there is room for improvement in the technique of JP2014-094698A in this regard.

### SUMMARY

The present disclosure is made in view of the above situations, and one purpose thereof is to provide a technique for highly suppressing deterioration of fuel in a hybrid vehicle provided with a motor and an engine as propulsion sources of the vehicle.

The invention is defined in the independent claims. According to one aspect of the present disclosure, a drive control device of a hybrid vehicle provided with a motor and an engine that are drive sources that propel the vehicle, is provided. The control device includes a processor configured to execute a target fuel consumption setting module that sets a target fuel consumption of the engine according to the number of lapsed days from a given reference timing, an actual fuel consumption calculating module that calculates an actual fuel consumption that is a fuel amount actually consumed during a specific period from the reference timing, a forcible consumption calculating module that compares the actual fuel consumption with the target fuel consumption, and when the actual fuel consumption is less than the target fuel consumption, calculates a forcible consumption of fuel according to a difference between the target fuel consumption and the actual fuel consumption, and a traveling controlling module that controls the drive of the motor and the engine so that traveling at least with the engine is continuously performed until the fuel is consumed by the forcible consumption calculated by the forcible consumption calculating module.

In the drive control device, the target fuel consumption according to the number of lapsed days from the given reference timing is set, and when the actual fuel consumption which is actually consumed during the specific period from the reference timing is less than the target fuel consumption at that time, the forcible consumption of the fuel is set according to the difference. Then, the traveling at least with the engine is continuously performed until the fuel is consumed by the forcible consumption.

According to this configuration, even when the consumption of the fuel tends to decrease due to the status and the condition of use of the hybrid vehicle, the certain amount (forcible consumption) of fuel can be securely consumed after the specific period passed. Therefore, it becomes possible to consume fuel before the fuel deteriorates (i.e., to substantially suppress the deterioration of the fuel), and as a result, the issues of the fuel system components, such as the corrosion of a fuel tank, a fuel pipe, etc. which are originated in the deterioration of fuel can be prevented.

In this case, the traveling controlling module may control the drive of the motor and the engine so that the vehicle suspends traveling by the motor and travels only by the engine, until the fuel is consumed by the forcible consumption.

According to this configuration, since the demanded torque of the vehicle is generated only with the engine, the forcible consumption of the fuel can be consumed in a shorter period, compared with a case where both the engine and the motor are used for traveling. Thus, it contributes more to suppressing the deterioration of the fuel.

When the forcible consumption is calculated while traveling only by the motor, after the vehicle is stopped, the traveling controlling module may start the engine when traveling is restarted.

According to this configuration, in the operating range where the vehicle travels only by the motor (i.e., during the travel in a low-load range where the engine is not normally started), the engine starting suddenly and giving a feeling of discomfort to an operator can be avoided.

The reference timing may be a refueled timing. The actual fuel consumption calculating module may calculate an actual fuel consumption that is a fuel amount consumed during the specific period from the latest refueled timing.

According to this configuration, the actual fuel consumption is calculated on the basis of the refueled timing, and based on this actual fuel consumption, the forcible consumption of the fuel is calculated. That is, since the forcible consumption is calculated on the basis of the refueled timing, the forcible consumption can be set suitably in view of suppressing the deterioration of the fuel.

The drive control device may further include a sensor that detects an opening-and-closing operation of a lid member that opens and closes a fueling port of a fuel tank, and memory that stores a timing of the sensor detecting that the opening-and-closing operation is performed, as the refueled timing. The actual fuel consumption calculating module may calculate an actual fuel consumption from the refueled timing stored in the memory.

According to this configuration, at the time the opening-and-closing operation of the lid member is detected when refueling, this timing is stored as the refueled timing. Thus, the identification of the refueled timing which is the basis of the calculation of the forcible consumption, is automated.

The processor may be further configured to execute an information acquiring module that acquires information on an ambient temperature. When the ambient temperature is relatively high, the actual fuel consumption calculating module may calculate the actual fuel consumption in a relatively short period as the specific period. Particularly, as the ambient temperature becomes higher, the actual fuel consumption calculating module may calculate the actual fuel consumption in a shorter period as the specific period.

The fuel tends to deteriorate more as the temperature becomes relatively high. According to this configuration, when the ambient temperature is relatively high, the forcible consumption is calculated in a relatively shorter period from the reference timing. Thus, when the ambient temperature is relatively high, the fuel can be consumed at an earlier stage from the reference timing. Therefore, it becomes possible to further suppress the deterioration of fuel.

The drive control device may further include an informing device that informs an operator of information by at least one of an image and sound, and an information controlling module that controls the informing device to inform the operator when the travel at least with the engine is continuously performed until the fuel is consumed by the forcible consumption.

According to this configuration, since the operator can be made aware of the reason why the engine is started, even when the engine is started in the operating range where the engine is not normally started (especially at the start of the vehicle travel), the operator feeling discomfort can be avoided.

### BRIEF DESCRIPTION OF DRAWINGS

Fig. 1 is a block diagram schematically illustrating a configuration of a hybrid vehicle according to one embodiment (a hybrid vehicle provided with a drive control device according to the present disclosure).
Fig. 2 is a block diagram illustrating a configuration of a control system of the hybrid vehicle.
Fig. 3 is a flowchart illustrating one example of a traveling control of the hybrid vehicle.
Fig. 4 is a graph illustrating a simulation result of the fuel consumptions of the hybrid vehicle and a conventional hybrid vehicle.
Fig. 5 is a part of a flowchart according to a modification of the traveling control.
Fig. 6 is a table illustrating one example of table data where a relationship between an ambient temperature and a specific period (number of months passed) is defined.

### DETAILED DESCRIPTION

Hereinafter, one embodiment of the present disclosure is described in detail with reference to the accompanying drawings. All of the features as shown in the drawings may not necessarily be essential.

### Overall Configuration of Hybrid Vehicle

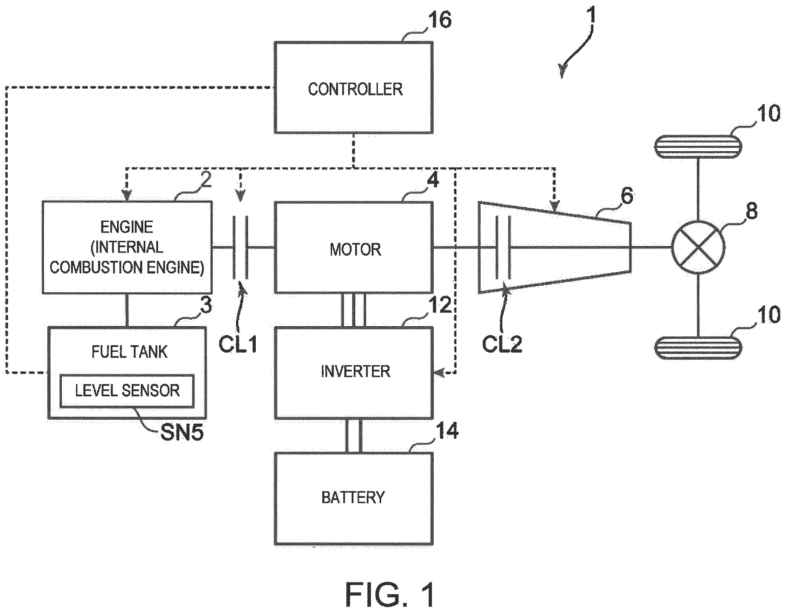

Fig. 1 is a block diagram schematically illustrating a configuration of a hybrid vehicle according to one embodiment (a hybrid vehicle to which a drive control device according to the present disclosure is applied). A hybrid vehicle 1 illustrated in this drawing includes an engine (e.g. an internal combustion engine) 2, a motor 4, a transmission 6, a clutch CL1, a differential gear 8, driving wheels 10, an inverter 12, a battery 14, and a controller 16. The engine 2 and the motor 4 both generate a driving force for propelling the vehicle (propelling force).

The engine 2 is an internal combustion engine which generates the driving force by combusting fuel. The fuel is stored in a fuel tank 3 and supplied from the fuel tank 3 to the engine 2 through a fuel pipe, a filter, etc. The fuel tank 3 may be provided with a level sensor SN5 that monitors a residual fuel quantity (stored quantity). In this example, the engine 2 is a gasoline engine which uses fuel mainly comprised of gasoline, but it may also be a diesel engine which uses diesel oil as the fuel.

The motor 4 may be, for example, a three-phase alternating-current synchronous motor generator which generates the driving force in response to supply of electric power stored in the battery 14. When the hybrid vehicle 1 slows down, the motor 4 may generate power by a rotational force transmitted from the driving wheels 10. In this case, a braking force according to the electric power generated by the motor 4 may act on the driving wheels 10. The power generated by the motor 4 is charged in the battery 14 via the inverter 12.

The engine 2 and the motor 4 may be connected in series via the clutch CL1. The motor 4 may be connected to a drive shaft of the driving wheels 10 via the transmission 6 and the differential gear 8. According to this configuration, the engine 2 and the motor 4 can give the driving force or the braking force to the driving wheels 10 via the transmission 6, etc.

The clutch CL1 may connect and/or disconnect an output shaft (crankshaft) of the engine 2 and a rotation shaft (rotor shaft) of the motor 4. Transmission and interception of torque between the engine 2 and the motor 4 may be switched by connecting and disconnecting the output shaft and the rotation shaft. Note that, when starting the engine 2, the motor 4 may function as a starter motor by connecting the clutch CL1, and therefore, cranking of the engine 2 is performed.

The transmission 6 has a function for changing and outputting the gear (stage, or rotational speed) of the rotation shaft of the motor 4, and, for example, it is a transmission with six forward gears (or speeds) and one reverse gear (or speed). In detail, the transmission 6 includes an input shaft, a plurality of planetary gear mechanisms, a plurality of brake mechanisms, a plurality of clutch mechanisms, and an output shaft. It switches a transmission path of the torque inputted into the input shaft by operation of each mechanism to change the gear and output the speed of the torque from the output shaft. The input shaft of the transmission 6 is connected to the rotation shaft of the motor 4, and the output shaft is connected to the differential gear 8 directly, or indirectly via the drive shaft. Note that since the plurality of clutch mechanisms of the transmission 6 realize a desired gear stage by mutual collaboration, they can roughly be considered as a single clutch CL2 as a whole. Therefore, when the clutch CL2 is disconnected (i.e., when the transmission 6 is set at the neutral), the torque transmission between the input shaft and the output shaft is intercepted.

In this hybrid vehicle 1, when the clutch CL2 is connected and the clutch CL1 is disconnected, only the driving force generated by the motor 4 is given to the driving wheels 10 via the transmission 6, etc. On the other hand, when both the clutches CL1 and CL2 are connected, the driving forces of the engine 2 and the motor 4 are given to the driving wheels 10 via the transmission 6, etc. Here, when the motor 4 does not generate the driving force (when the power supply to the motor 4 is intercepted), only the driving force generated by the engine 2 is given to the driving wheels 10 via the transmission 6, etc.

That is, the hybrid vehicle 1 can travel in one of a mode in which the vehicle travels only by the driving force of the motor 4, a mode in which the vehicle travels by both the driving forces of the motor 4 and the engine 2, and a mode in which the vehicle travels only by the driving force of the engine 2. Note that, in this example, as will be described later, the hybrid vehicle 1 is controlled, based on the operating range (operating condition), in one of a "motor-drive mode" in which the vehicle travels only by the driving force of the motor 4, and an "engine-drive mode" in which the vehicle travels only by the driving force of the engine 2. In detail, the "motor-drive mode" may be performed in a low-load range where the demanded torque is low, and the "engine-drive mode" may be performed in a high-load range where the load is higher than the low-load range.

The battery 14 is a secondary battery which is chargeable and/or dischargeable. The battery 14 may be a lithium-ion battery or a nickel-hydrogen battery. The battery 14 supplies electric power to the motor 4 via the inverter 12, and stores electricity by accepting via the inverter 12 the electric power generated by the motor 4.

The inverter 12 may convert three-phase alternating current power into direct current power, and vice versa. That is, when the motor 4 generates the driving force, the inverter 12 converts the direct current power stored in the battery 14 into the three-phase alternating current power, and supplies it to the motor 4, and when the three-phase alternating current power is generated by the motor 4, the inverter 12 converts the three-phase alternating current power into the direct current power, and supplies it to the battery 14.

The controller 16 mainly constitutes a drive control device according to the present disclosure. The controller 16 comprehensively controls the engine 2, the inverter 12 (the motor 4), the transmission 6, and the clutch CL1 so that the traveling of the hybrid vehicle 1 according to the operating condition is realized. The controller 16 is constituted based on a well-known microcomputer, and may be provided with a processor 168 (e.g., a CPU (Central Processing Unit)) which executes various programs, and memory 169 (e.g., ROM and/or RAM), for storing the programs and various data.

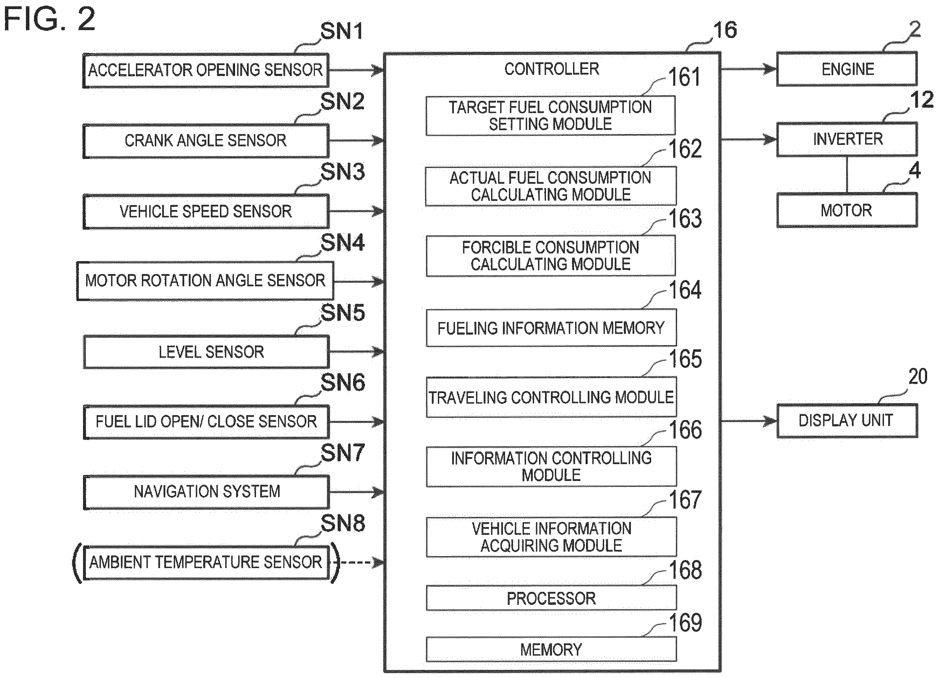

Fig. 2 is a block diagram schematically illustrating a configuration of a control system of the hybrid vehicle 1. As illustrated in this drawing, information from one or various sensors provided to the vehicle is inputted into the controller 16. For example, the hybrid vehicle 1 is connected to an accelerator opening sensor SN1 which detects an accelerator opening, a crank angle sensor SN2 which detects a rotational speed of the engine 2 (engine speed), a vehicle speed sensor SN3 which detects a traveling speed of the hybrid vehicle 1, and a rotation angle sensor SN4 which detects a rotational position and a rotational speed of the motor 4. Signals from these sensors SN1-SN4 are inputted into the controller 16. The controller 16 controls the engine 2, the motor 4 (the inverter 12), the transmission 6, and the clutch CL1 based on the input signals (information) from the SN1-SN4 so that suitable torque according to the traveling state of the hybrid vehicle 1 is acquired, and performs processing, such as various calculations and determination, accompanying this control. That is, the controller 16 controls the output torque of the engine 2 by operating an intake air amount, an ignition timing, a fuel injection amount of the engine 2, and the gear stage of the transmission 6, and controls the driving torque or the braking torque generated by the motor 4 via the inverter 12. Further, the clutch CL1 is connected and disconnected based on the operating condition.

In this case, as described above, the controller 16 may perform, mainly in the low-load range, the "motor-drive mode" in which the hybrid vehicle 1 travels only by the driving force of the motor 4, and may perform, in the high-load range where the load is higher than the low-load range, the "engine-drive mode" in which the vehicle 1 travels only by the driving force of the engine 2.

Note that depending on the status and the condition of use of the hybrid vehicle 1, the execution frequency of the "engine-drive mode" may decrease remarkably. In this case, since the fuel inside the fuel tank 3 is not consumed for a long period of time, it deteriorates. The deterioration of fuel corresponds to a state where the fuel (gasoline) is oxidized to a certain level. Such a deterioration of fuel may adversely affect the fuel system components, such as corrosion of the fuel tank 3 and the fuel pipe.

The controller 16 includes modules, particularly software modules, for suppressing such a deterioration of the fuel. These modules are stored in the memory 169 and are executed by the processor 168 to perform their respective functions. In detail, the modules include a target fuel consumption setting module 161, an actual fuel consumption calculating module 162, a forcible consumption calculating module 163, a traveling controlling module 165, an information controlling module 166, and a vehicle information acquiring module 167. The controller 16 is also provided with a fueling information memory 164, which may be a region of the memory 169.

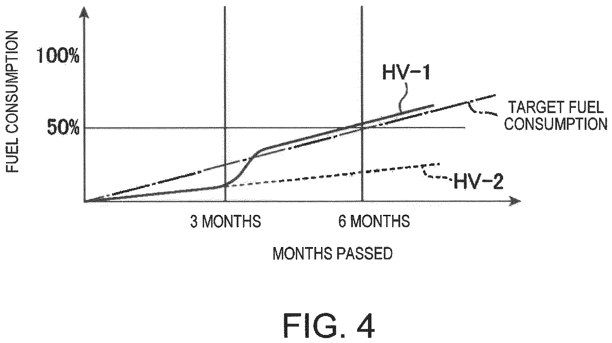

The target fuel consumption setting module 161 sets a target fuel consumption Tfc which is a target value of the amount of consumption of the fuel (gasoline) stored in the fuel tank 3. The target fuel consumption Tfc is defined as an accumulated value, when a certain amount of fuel is consumed for every time a given number of days lapsed from the refueled date (one example of a refueled timing) as a starting date (one example of an initial date). In this example, the target fuel consumption setting module 161 may set the target fuel consumption Tfc so that the given amount of fuel is consumed when a given period of time passes, on the basis of a fuel level immediately after refueled on the date of refueling. In more detail, for example, when the fuel level on the refueled date is full, the target fuel consumption setting module 161 may set the target fuel consumption Tfc so that, as illustrated in Fig. 4, half of the fuel is consumed by six months from the refueled date, and the accumulated value of the fuel consumption gradually increases linearly.

Although it is depending on the condition of use of the hybrid vehicle 1 and the fuel composition, a quality assurance period of the fuel (gasoline) is desirably assumed as six months, if the period is assumed on disadvantageous conditions for the fuel deterioration. However, if at least the half of the fuel is consumed by six months from the refueled date, a chance of refueling may come thereafter is high, and therefore, the old fuel will be diluted by the refueling. Based on such reasons, in this example, the target fuel consumption Tfc is set as described above.

Note that the various sensors include the level sensor SN5 which detects a fuel level of the fuel tank 3, and a fuel lid open/close sensor SN6 which detects an opening-and-closing operation of a fuel lid (lid member). Signals (information) from the sensors SN5 and SN6 and date information from a navigation system SN7 are inputted into the controller 16. That is, since the opening-and-closing operation of the fuel lid is performed when refueled, the target fuel consumption setting module 161 detects the existence of refueling based on the signal input from the fuel lid open/close sensor SN6, and further identifies the refueled date based on the date information from the navigation system SN7. Further, based on the signal from the level sensor SN5, it identifies a fuel level after refueled on the refueled date.

The actual fuel consumption calculating module 162 calculates an amount of fuel actually consumed during a specific period from the refueled date (an actual fuel consumption Afc). The specific period may be three months in this example, and, therefore, the actual fuel consumption calculating module 162 may calculate a difference between a fuel level of the fuel tank 3 on the refueled date and a fuel level of the fuel tank 3 after three months, as the actual fuel consumption Afc. Note that the actual fuel consumption calculating module 162 is not limited to the configuration which calculates the actual fuel consumption Afc based on the fuel level of the fuel tank 3, but may have a configuration which integrates a fuel injection amount of the engine 2 from the refueled date, for example.

The forcible consumption calculating module 163 may compare the actual fuel consumption Afc at three months (specific period) with the target fuel consumption Tfc, and if the actual fuel consumption Afc is less than the target fuel consumption Tfc, it calculates a forcible consumption Ffc of the fuel according to the difference. The forcible consumption Ffc is, for example, an amount corresponding to the difference, or an amount which is larger than the difference by a certain amount.

The fueling information memory 164 stores the refueled date identified by the target fuel consumption setting module 161, the fuel level on the refueled date, and the target fuel consumption Tfc, and updates the data of the refueled date, the fuel level, and the target fuel consumption Tfc upon refueling. Note that the actual fuel consumption calculating module 162 may count the specific period (three months) on the basis of the refueled date stored in the fueling information memory 164, and the forcible consumption calculating module 163 may calculate the forcible consumption Ffc based on the fuel level stored in the fueling information memory 164.

The traveling controlling module 165 performs a traveling control of the hybrid vehicle 1 according to an operating state. That is, the traveling controlling module 165 controls the engine 2, the motor 4 (the inverter 12), the transmission 6, and the clutch CL1 so that it selectively performs the "motor-drive mode" or the "engine-drive mode." Further, when the forcible consumption Ffc is calculated by the forcible consumption calculating module 163, the traveling controlling module 165 performs a "forcible engine-drive mode" in which the vehicle is forced to travel only by the driving force of the engine 2 until the fuel is consumed by the amount of the forcible consumption Ffc. In this "forcible engine-drive mode," the "engine-drive mode" is performed regardless of the operating range (demanded torque) of the hybrid vehicle 1. That is, also in the low-load range in which the "motor-drive mode" is normally performed, the "engine-drive mode" is performed instead of the "motor-drive mode." Thus, by performing the "forcible engine-drive mode," the fuel stored in the fuel tank 3 for a long period of time is forcibly consumed.

The information controlling module 166 may control an indication of a display unit 20 during execution of the "forcible engine-drive mode" so that it informs an operator that the mode is currently performed. The display unit 20 (one example of an informing device) is a display device connected to the controller 16 for displaying image data, such as the traveling state of the hybrid vehicle 1 and map information of the navigation system. For example, a meter display or a heads-up display (HUD) disposed ahead of the driver's seat, or a center display installed at the center of the instrument panel in the vehicle width direction, corresponds to the display unit 20. For example, the information controlling module 166 informs the operator that the "forcible engine-drive mode" is currently performed, by displaying an object for exclusive use on a screen of the display unit 20. In this case, the information controlling module 166 may inform, in addition to or instead of displaying the indication of the dedicated object on the screen of the display unit 20, by sound to the operator that the "forcible engine-drive mode" is currently performed from an on-board speaker (one example of the informing device).

The vehicle information acquiring module 167 (information acquiring module) acquires information from the one or various sensors SN1-SN6, i.e., information on the accelerator opening, the engine speed, the vehicle speed, the motor rotational speed, the fuel level, and the open/close of the fuel lid, and acquires the date information from the navigation system SN7.

### Traveling Control of Hybrid Vehicle

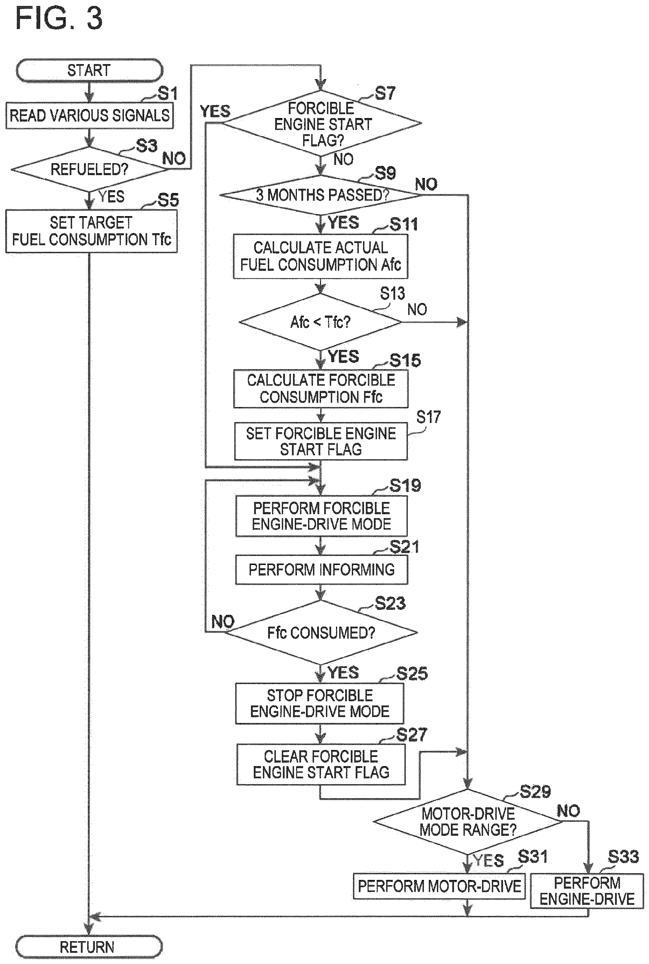

Next, the traveling control of the hybrid vehicle 1 by the controller 16 is described. Fig. 3 is a flowchart illustrating one example of the traveling control of the hybrid vehicle 1. The control of this flowchart may be triggered by turning on the ignition (or an ignition switch), and it is provided by exhibiting the above-described functions of the modules 161-167 included in the controller 16.

When the flow starts, the controller 16 may acquire the variety of information including the information from the sensors SN1-SN7, and first determines the existence of refueling (Steps S1 and S3). If Yes at Step S3 (if determined that refueling is performed), the controller 16 identifies the refueled date and the fuel level, further sets the target fuel consumption Tfc based on the information (Step S5), and stores the refueled date, the fuel level, and the target fuel consumption Tfc. Then, it returns the processing to Step S1.

On the other hand, if No at Step S3 (if refueling is not performed), the controller 16 then determines the existence of a forcible engine start flag (Step S7). The forcible engine start flag is a flag indicative of that the "forcible engine-drive mode" is currently performed, and it is set by processing at Step S17 described later.

If No at Step S7 (if the flag is not set), the controller 16 may determine whether three months (specific period) has passed since the refueled date (Step S9), and if No at Step S9 (if determined that three months has not yet passed), it shifts the processing to Step S29. At Step S29, it determines whether the operating range of the hybrid vehicle 1 is a range of the "motor-drive mode" (that is, the operating range is the low-load range). If Yes at Step S29, the controller 16 may perform the "motor-drive mode" (Step S31), and, if No, it performs the "engine-drive mode" (Step S33). Then, it returns the processing to Step S1. Thus, when the operating range of the hybrid vehicle 1 is the low-load range, the hybrid vehicle 1 may travel only the driving force of the motor 4, and when the operating range of the hybrid vehicle 1 is the high-load range where the load is higher than the low-load range, the hybrid vehicle 1 may travel only by the driving force of the engine 2.

If Yes at Step S9 (if determined that three months has passed since the refueled date), the controller 16 may calculate the actual fuel consumption Afc (Step S11), and may further determine whether the actual fuel consumption Afc is less than the target fuel consumption Tfc after three months (Step S13). If No at Step S13, the controller 16 shifts the processing to Step S29. On the other hand, if Yes at Step S13 (if determined that the actual fuel consumption Afc < the target fuel consumption Tfc), the controller 16 calculates the forcible consumption Ffc, and after setting the forcible engine start flag, starts the "forcible engine-drive mode" and performs processing for informing this to the operator (Steps S15-S21). The "forcible engine-drive mode" is a mode in which the "engine-drive mode" is forcibly performed, regardless of the operating range of the hybrid vehicle 1, as described above. Therefore, when the hybrid vehicle 1 is in a stopped state, the controller 16 starts the engine 2 when the vehicle starts traveling so as to perform the "engine-drive mode" from the low-load range. Further, when the hybrid vehicle 1 is traveling in the "motor-drive mode," after the vehicle is stopped, the controller 16 starts the engine 2 when the vehicle restarts traveling to start the "engine-drive mode,"

In the processing at Step S21, the controller 16 may display the dedicated object on the screen of the display unit 20 to inform to the operator that the "forcible engine-drive mode" is currently performed. Although the timing of the informing processing is immediately after the start of the "forcible engine-drive mode" in this example, it may be at or immediately before the start of the "forcible engine-drive mode."

After the processing at Step S21, at Step S23, the controller 16 may determine whether the fuel is consumed by the forcible consumption Ffc. If No at Step S23 (if determined that the fuel has been consumed less), the controller 16 returns the processing to Step S19. Therefore, the "forcible engine-drive mode" is continuously performed until the fuel is consumed by the forcible consumption Ffc, and the processing for informing this to the operator is continuously performed.

If Yes at Step S23 (if determined that the fuel is consumed by the forcible consumption Ffc), the controller 16 stops (cancels) the "forcible engine-drive mode," clears the forcible engine start flag (Steps S25 and S27), and then shifts the processing to Step S29. Thus, the controller 16 resumes the control to the normal control in which the "motor-drive mode" and the "engine-drive mode" are selectively performed according to the operating range of the hybrid vehicle 1.

Note that, in the processing at Step S7, if determined that the forcible engine start flag is set, the controller 16 skips the processing of Steps S9-S17 described above, and shifts the processing to Step S19. Thus, the "forcible engine-drive mode" is performed immediately. That is, when the ignition is turned off before the fuel is consumed by the forcible consumption Ffc, the "forcible engine-drive mode" is resumed when the ignition is turned on next time. Thus, even when OFF/ON of the ignition intervenes, the "forcible engine-drive mode" is continuously performed until the fuel is consumed by the forcible consumption Ffc.

### Operation and Effects of Embodiment

As described above, in this hybrid vehicle 1, when the fuel tank 3 is supplied with fuel, the target fuel consumption Tfc is set according to the number of lapsed days from the refueled date, and when the actual fuel consumption Afc which is actually consumed in three months from the refueled date is less than the target fuel consumption Tfc at that time, the forcible consumption Ffc of the fuel is set according to the difference. Then, the "forcible engine-drive mode" is continuously performed until the fuel is consumed by the forcible consumption Ffc.

According to this configuration of the hybrid vehicle 1, even when the consumption of the fuel tends to decrease due to the status and the condition of use, the certain amount (forcible consumption Ffc) of fuel can be securely consumed within three months. Therefore, it becomes possible to consume fuel before the fuel deteriorates (i.e., to substantially suppress the deterioration of the fuel), and, as a result, the troubles of the fuel system components, such as the corrosion of the fuel tank 3, the fuel pipe, etc. which are originated in the deterioration of fuel can be prevented.

Particularly, in this hybrid vehicle 1, even when OFF/ON of the ignition intervenes, the "forcible engine-drive mode" is continuously performed until the fuel is consumed by the forcible consumption Ffc. Therefore, the certain amount (forcible consumption Ffc) of fuel can be consumed more securely, compared with the configuration in which the "forcible engine-drive mode" is canceled when OFF/ON of the ignition intervenes.

Fig. 4 is a graph illustrating a simulation result of the fuel consumption, which illustrates a relationship between the number of months passed from the refueled date and the fuel consumption when the hybrid vehicle 1 travels mainly in the low-load range. A solid line (HV-1) indicates a fuel consumption of the hybrid vehicle 1 of this embodiment, and a broken line (HV-2) indicates a fuel consumption of a hybrid vehicle (comparative example) when not carrying out the "forcible engine-drive mode." Since this simulation is mainly for traveling in the low-load range, in the hybrid vehicle of the comparative example, the frequency of starting the engine is generally less, and, therefore, the fuel consumption until six months passes is too small, in comparison with the target fuel consumption Tfc. In the illustrated example, the fuel consumption in six months is about 20% of the full tank (i.e., the fuel level is full).

On the other hand, the level of the fuel consumption of the hybrid vehicle 1 of this embodiment until three months passes is similar to that of the conventional hybrid vehicle. However, the fuel consumption increases somewhat rapidly when three months passed, and the fuel consumption thereafter becomes a value close to the target fuel consumption Tfc. This is because the "forcible engine-drive mode" is performed from the lapse of three months, and, as a result, the fuel consumption after six months achieves about 50% of the full tank. Thus, according to the hybrid vehicle 1 of this embodiment, since the consumption of fuel is promoted at the timing of the lapse of three months from the refueled date, the deterioration of fuel can be suppressed.

Note that, in this hybrid vehicle 1, when an execution of the "forcible engine-drive mode" is needed during the travel in the "motor-drive mode," after the hybrid vehicle 1 is stopped, the engine 2 is started when traveling is restarted. Therefore, during the travel in the "motor-drive mode" (i.e., during the travel in the low-load range where the engine 2 is not normally started), the engine 2 will not start suddenly so that it will not give the operator uncomfortableness. In addition, during the execution of the "forcible engine-drive mode," since this is displayed by the dedicated object on the screen of the display unit 20 to inform this to the operator, the operator can grasp the reason why the engine 2 is started when the travel is started. Therefore, also in this regard, it can be avoided that the start of the engine 2 gives the operator uncomfortableness.

### Modifications

The drive control device of the hybrid vehicle 1 described above is illustration of a desirable embodiment of the present disclosure, and the concrete configuration thereof may suitably be changed. For example, the following configurations may also be applicable.
(1) In the above embodiment, the actual fuel consumption calculating module 162 calculates the actual fuel consumption Afc, and based on this actual fuel consumption Afc, the forcible consumption calculating module 163 calculates the forcible consumption Ffc, when three months passed as the specific period in the present disclosure. However, this specific period is not limited to three months, but may be changed suitably. For example, it may be less than three months, or may be longer than three months. Further, a plurality of specific periods may be set. That is, the actual fuel consumption Afc may be calculated each time one month, two months, three months, four months... passes from the refueled date.

Note that since the fuel (gasoline) tends to be influenced by temperature, and, in more detail, it deteriorates more as the temperature becomes relatively high, the specific period may be selected according to the ambient temperature. A configuration (control) of such a case is described below.

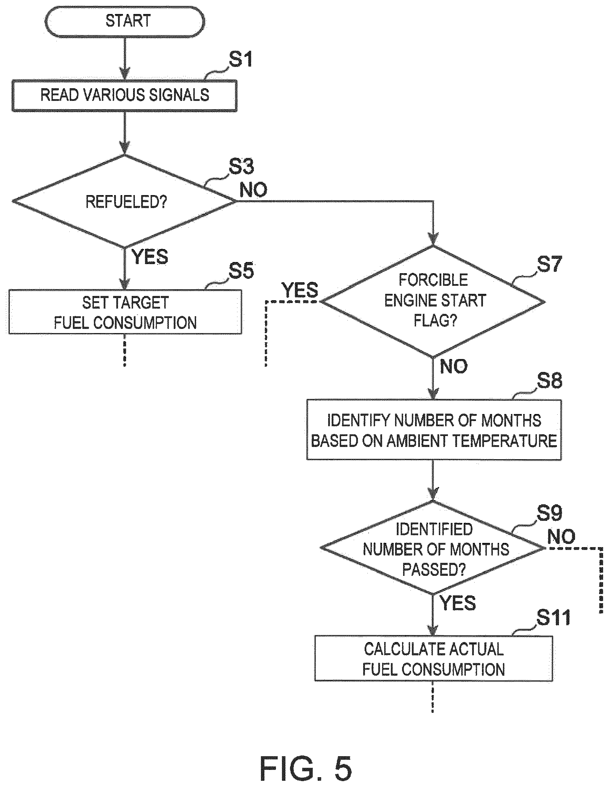

Fig. 5 is a flowchart illustrating one example of the traveling control when selecting the specific period according to the ambient temperature. In detail, processing at Step S8 is added to the flowchart of the above embodiment (Fig. 3), and the processing at Step S9 is changed. The processing other than that is the same as the flowchart of Fig. 3. Therefore, in Fig. 5, only Steps S1-S11 are illustrated, and the other steps are omitted.

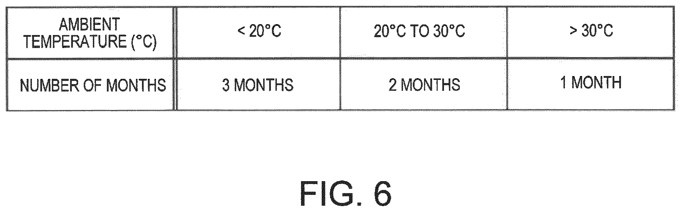

In the example of Fig. 5, if No at Step S7 (if the forcible engine start flag is not set), at Step S8, the controller 16 identifies the number of months (specific period) based on information from an ambient temperature sensor SN8 (illustrated in parentheses in Fig. 2), for example, based on table data illustrated in Fig. 6 stored beforehand. The ambient temperature in Fig. 6 may be a daily mean temperature. Then, it determines by the processing at Step S9 whether the number of months identified at Step S8 passed, and if Yes (if the specific number of months passed), the controller 16 calculates the actual fuel consumption Afc (Step S11).

According to this configuration, when the ambient temperature is relatively high, the actual fuel consumption Afc is calculated in a shorter period from the refueled date, compared with the case where the ambient temperature is relatively low, and the forcible consumption Ffc is calculated if needed. Therefore, as compared with the case where the actual fuel consumption Afc is calculated simply when the given period of time passes from the refueled date, the actual fuel consumption Afc can be calculated with a more reasonable period in consideration of the relationship between the property of fuel and the temperature, and, as a result, the "forcible engine-drive mode" can be performed. Therefore, it becomes possible to further suppress the deterioration of fuel.

Note that the processing at Steps S8-S 11 in the flowchart of Fig. 5 is mainly provided by the function of the actual fuel consumption calculating module 162 among the functional configuration of the controller 16. Further, the table data of Fig. 6 is stored beforehand in the fueling information memory 164.

(2) In the "forcible engine-drive mode" of this embodiment, the hybrid vehicle 1 travels only by the driving force of the engine 2. However, the hybrid vehicle 1 may travel using both the driving force of the engine 2 and the driving force of the motor 4. That is, the "forcible engine-drive mode" may be a mode in which the hybrid vehicle 1 travels at least by the driving force of the engine. Also in this configuration, since the fuel can forcibly be consumed within three months, it is possible to give similar effects to the above embodiment. Note that, in this case, as compared with the configuration of the above embodiment in which the hybrid vehicle 1 travels only by the driving force of the engine 2, it may take a longer time to consume the fuel by the forcible consumption Ffc. Therefore, from the viewpoint of consuming fuel by the forcible consumption Ffc at an earlier stage (i.e., consuming fuel before it is deteriorated) so as to suppress the deterioration of the fuel, the mode of the "forcible engine-drive mode" of the above embodiment may be preferred.

(3) In the above embodiment, the target fuel consumption setting module 161 sets the target fuel consumption Tfc according to the number of lapsed days from the refueled date, using the refueled date as a reference date (the initial date). However, a more exact, refueled timing may be used as the reference timing, instead. Further, other than the refueled date, for example, a latest started date of the engine 2 may be used as the reference date (the initial date).

(4) In the above embodiment, as illustrated in Fig. 4, the target fuel consumption setting module 161 sets the target fuel consumption Tfc so that the accumulated value of the fuel consumption gradually increases linearly. However, the target fuel consumption Tfc is not limited to such a value. For example, the target fuel consumption Tfc may be set so that a certain amount of fuel is consumed within a given period of time, that is, so that the accumulated value of the fuel consumption increases gradually in a step-wise fashion, or so that the accumulated value of the fuel consumption increases gradually in a non-linear fashion. That is, the target fuel consumption Tfc may be set according to the number of lapsed days from the reference timing.

(5) The concrete configuration of the hybrid vehicle (the configuration of the drive control device) is not limited to the hybrid vehicle 1 of this embodiment, and the present disclosure is applicable as long as it is a hybrid vehicle provided with a motor and an engine which are driving sources for propelling the vehicle. Note that since, in a plug-in hybrid vehicle in which an engine is not started unless the mileage exceeds the battery drivable distance, the situation where the fuel is not used for a long period of time tends to occur, the configuration of the hybrid vehicle 1 described above may be useful especially for the plug-in hybrid vehicle.

It should be understood that the embodiments herein are illustrative and not restrictive, since the scope of the invention is defined by the appended claims rather than by the description preceding them.

### DESCRIPTION OF REFERENCE CHARACTERS

- 1: Hybrid Vehicle
- 2: Engine
- 3: Fuel Tank
- 4: Motor
- 6: Transmission
- 10: Driving Wheel
- 12: Inverter
- 14: Battery
- 16: Controller
- 161: Target Fuel Consumption Setting Module
- 162: Actual Fuel Consumption Calculating Module
- 163: Forcible Consumption Calculating Module
- 164: Fueling Information Memory
- 165: Traveling Controlling Module
- 166: Information Controlling Module
- 167: Vehicle Information Acquiring Module (Information Acquiring Module)
- CL1, CL2: Clutch

## Claims

1. A drive control device (16) of a hybrid vehicle (1) provided with a motor (4) and an engine (2) that are drive sources configured to propel the vehicle (1), the control device (16) comprising:
a target fuel consumption setting module (161) configured to set a target fuel consumption (Tfc) of the engine (2) according to the number of lapsed days from a given reference timing;
an actual fuel consumption calculating module (162) configured to calculate an actual fuel consumption (Afc) that is a fuel amount actually consumed during a specific period from the reference timing;
a forcible consumption calculating module (163) configured to compare the actual fuel consumption (Afc) with the target fuel consumption (Tfc), and when the actual fuel consumption (Afc) is less than the target fuel consumption (Tfc), configured to calculate a forcible consumption (Ffc) of fuel according to a difference between the target fuel consumption (Tfc) and the actual fuel consumption (Afc); and
a traveling controlling module (165) configured to control the drive of the motor (4) and the engine (2) so that traveling at least with the engine (2) is continuously performed until the fuel is consumed by the forcible consumption (Ffc) calculated by the forcible consumption calculating module (163).

2. The drive control device (16) of claim 1, wherein the traveling controlling module (165) is configured to control the drive of the motor (4) and the engine (2) so that the vehicle (1) suspends traveling by the motor (4) and travels only by the engine (2), until the fuel is consumed by the forcible consumption (Ffc).

3. The drive control device (16) of claim 1 or 2, wherein when the forcible consumption (Ffc) is calculated while traveling only by the motor (4), the traveling controlling module (165) is configured to start the engine (2) when traveling is restarted after the vehicle (1) is stopped.

4. The drive control device (16) of any one of the preceding claims,
wherein the reference timing is a refueled timing.

5. The drive control device (16) of claim 4,
wherein the actual fuel consumption calculating module (162) is configured to calculate an actual fuel consumption (Afc) that is a fuel amount consumed during the specific period from the latest refueled timing.

6. The drive control device (16) of any one of the preceding claims, further comprising:
a sensor (SN6) configured to detect an opening-and-closing operation of a lid member configured to open and/or close a fueling port of a fuel tank; and
memory (164) configured to store a timing of the sensor (SN6) detecting that the opening-and-closing operation is performed, as the refueled timing,
wherein the actual fuel consumption calculating module (162) is configured to calculate an actual fuel consumption (Afc) from the refueled timing stored in the memory (164).

7. The drive control device (16) of any one of the preceding claims,
further comprising an information acquiring module (167) configured to acquire information on an ambient temperature.

8. The drive control device (16) of claim 7, wherein
when the ambient temperature is relatively high, the actual fuel consumption calculating module (162) is configured to calculate the actual fuel consumption (Afc) in a relatively short period as the specific period.

9. The drive control device (16) of claim 7, wherein
as the ambient temperature becomes higher, the actual fuel consumption calculating module (162) is configured to calculate the actual fuel consumption (Afc) in a shorter period as the specific period.

10. The drive control device (16) of any one of the preceding claims, further comprising:
an informing device (20) configured to inform an operator of information by at least one of an image and sound; and
an information controlling module (166) configured to control the informing device (20) to inform the operator when the travel at least with the engine (2) is continuously performed until the fuel is consumed by the forcible consumption (Ffc).

11. The drive control device (16) of any one of the preceding claims, wherein
the target fuel consumption setting module (161) is configured to set the target fuel consumption (Tfc) so that the target fuel consumption (Tfc) increases as the number of lapsed days from the given reference timing increases.

12. A hybrid vehicle (1) comprising:
a motor (4) and an engine (2) that are drive sources configured to propel the vehicle (1); and
the drive control device (16) of any one of the preceding claims.

13. A method of controlling a hybrid vehicle (1) provided with a motor (4) and an engine (2) that are drive sources configured to propel the vehicle (1), the method comprising:
setting a target fuel consumption (Tfc) of the engine (2) according to the number of lapsed days from a given reference timing;
calculating an actual fuel consumption (Afc) that is a fuel amount actually consumed during a specific period from the reference timing;
comparing the actual fuel consumption (Afc) with the target fuel consumption (Tfc);
calculating, when the actual fuel consumption (Afc) is less than the target fuel consumption (Tfc), a forcible consumption (Ffc) of fuel according to a difference between the target fuel consumption (Tfc) and the actual fuel consumption (Afc); and
continuously performing traveling at least with the engine (2) until the fuel is consumed by the forcible consumption (Ffc).
